# EUROPÄISCHE PATENTSCHRIFT

(11) **EP 1 029 436 B1**
(45) Veröffentlichungstag und Bekanntmachung des Hinweises auf die Patenterteilung: **26.01.2005**
(21) Anmeldenummer: 00102822.4
(22) Anmeldetag: 11.02.2000
(51) Int. Cl.: A01D 42/00, A01D 34/82

(54) **Halterung, Mähwerk und Fahrzeug bzw. Arbeitsgerät**
Fixture, mower and vehicle respectively work implement
Fixation, faucheuse et véhicule resp. appareil de travail

(30) Priorität: 16.02.1999 US 250712
(43) Veröffentlichungstag der Anmeldung: 23.08.2000
(73) Patentinhaber: DEERE & COMPANY, Moline, Illinois 61265-8098 (US)
(72) Erfinder: Buss, Steven Henry, Horicon, WI 53032 (US); Holland, Ronald Paul, Fox Lake, WI 53933 (US); Benter, Dean, William, Horicon, WI 53032 (US)
(74) Vertreter: Magin, Ludwig Bernhard

(56) Entgegenhaltungen:
- DE-A- 2 727 157
- US-A- 2 862 376
- US-A- 2 870 616
- US-A- 3 664 434
- US-A- 4 922 698
- US-A- 5 628 171

## Beschreibung

Die Erfindung betrifft eine Halterung zwischen einem Einsatz und einem Gehäuse eines Mähwerks mit zumindest einem Befestigungsmittel, das durch eine Öffnung in dem Einsatz hindurchführbar und mit dem Gehäuse in Formschluß bringbar ist, und mit Mitteln, durch die das Befestigungsmittel gegen ein Verdrehen bezogen auf den Einsatz sicherbar ist, ein Mähwerk sowie ein Fahrzeug bzw. Arbeitsgerät.

Übliche Mähgeräte weisen Mähgehäuse oder -werke auf, die ein oder mehrere Messer umschließen. In diesen üblichen Gehäusen sind Auswurföffnungen vorgesehen, um es Grasabschnitten zu erlauben, aus dem Gehäuse ausgeworfen zu werden. Der Auswurf erlaubt es ebenfalls, daß Luft aus dem Gehäuse austreten kann, wobei es den rotierenden Messern ermöglicht wird, einen Vakuumeffekt zu erzielen, um das Gras in dem Gehäuse anzuheben, so daß es ordentlich und gleichmäßig geschnitten werden kann. Die Abschnitte, die von der Auswurföffnung ausgegeben werden, werden auf das gemähte Gras geblasen oder durch die Verwendung eines Sammelanbaus, der an die Auswurföffnung angebaut ist, aufgenommen.

Darüber hinaus sind Mulchmäher bekannt, bei welchen der Bereich des Mähwerks verschlossen ist, in dem bei üblichen Mähgeräten der Auswurf angeordnet ist. Diese Mähgeräte weisen oftmals Veränderungen der Unterseite des Gehäuses wie Deflektoroberflächen zum Leiten von Pflanzenabschnitten nach vorne, nach unten und/oder nach innen in Richtung der zentralen Befestigung der Messer auf, so daß die Abschnitte nochmals geschnitten werden.

Um den Anforderungen von Bedienungspersonen gerecht zu werden, welche es unter manchen Bedingungen wünschen, Pflanzenabschnitte zu mulchen und unter anderen Bedingungen auszuwerfen oder zu sammeln, wurden Mulcheinsätze entwickelt, die in einem Mähgehäuse angebracht werden, welches ansonsten zum Auswerfen oder Sammeln geeignet ist. Die US-A-5,628,171 zeigt einen solchen Mulcheinsatz, der an der Unterseite eines Mähgehäuses angebracht werden kann, um eine Auswurföffnung zu verschließen und um die Gestalt des Gehäuses so zu verändern, daß für jedes Messer eine Mähkammer gebildet wird. Die Befestigung des Einsatzes in dem Mähgehäuse erfolgt über Schrauben, die vor der Montage des Einsatzes an dem Mähgehäuse mittels einer aufgeschraubten Mutter an dem Einsatz gegen ein Herausfallen gesichert werden, wobei der Kopf der Schraube von einer Aussparung in dem Mulcheinsatz drehfest aufgenommen wird. Die Offenbarung der US-A-5,628,171 wird durch die Bezugnahme eingeschlossen.

Das der Erfindung zugrunde liegende Problem wird in der aufwendigen Ausführung bekannter Halterungen zwischen Einsätzen und Mähwerken, von Mähwerken als solche und mit diesen ausgestatteten Fahrzeugen bzw. Arbeitsgeräten gesehen.

Dieses Problem wird erfindungsgemäß durch die Lehre der Patentansprüche 1, 9 bzw. 10 gelöst, wobei in den weiteren Patentansprüchen die Lösung in vorteilhafter Weise weiterentwickelnde Merkmale aufgeführt sind.

Auf diese Weise kann das Befestigungsmittel an dem Einsatz drehfest angebracht werden, ohne daß in diesen genau ausgeführte Aussparungen zur Aufnahme einer Mutter eingebracht werden müßten, da das Befestigungsmittel durch die Aussparung in dem Mittel aufgenommen wird. Das Mittel kann aus einem anderen Material gefertigt werden als der Einsatz, welches sich zur Einbringung von Aussparungen (vorzugsweise besser) eignet, und ist und aufgrund seiner geringeren Abmessungen einfacher zu bearbeiten als der Einsatz als Ganzes. Die Öffnung in dem Einsatz kann daher gröber ausgeführt werden, da sie nur ein Durchdringen des Befestigungsmittels ermöglichen muß, aber keine Sicherungsfunktion zu erfüllen hat. Um das Mittel gegen ein Verdrehen zu sichern, genügt eine Anlagekante oder auch -fläche an die keine hohen Anforderungen bezüglich ihrer Festigkeit oder Genauigkeit gestellt werden müssen. Das Befestigungsmittel kann beispielsweise als ein Bolzen oder eine beliebige Schraube ausgeführt sein. Vorzugsweise handelt es sich aber um eine Schraube mit einem Vierkantansatz beispielsweise um eine eben solche Schloßschraube. Das Mittel ist vorzugsweise als eine Unterlegscheibe ausgebildet, die unterschiedliche Ausformungen aufweisen kann. Ein Einsatz kann an oder in jedem Gehäuse vorgesehen sein, an das zusätzliche Einrichtungen angebaut werden sollen. Hierbei kann es sich, wie oben beschrieben, um ein Mähwerk bzw. um ein Gehäuse eines Mähwerks handeln, das von einem Auswurf-/Aufsammelbetrieb auf Mulchbetrieb umgestellt werden soll, wozu es notwendig ist, eine Auswurföffnung zu verschließen und eventuell zusätzliche Leitflächen bzw. Begrenzungsflächen vorzusehen, um ein Mehrfachschneiden bzw. Mulchen von Pflanzenabschnitten zu ermöglichen. Es ist aber auch denkbar, Abweiser, Leiteinrichtungen oder Kombinationen derselben in Mähwerke einzubringen, um beispielsweise den Auswurf etc. günstig zu beeinflussen, wobei der Verschluß einer Auswurföffnung nicht immer notwendig oder erwünscht sein muß.

Um das Befestigungsmittel in der Öffnung gegen ein Herausfallen bzw. ein Verlieren zu sichern, kann auf dieses beispielsweise jenseits der Öffnung in dem Einsatz eine Mutter aufgeschraubt werden. Es genügt aber auch, eine Scheibe vorzusehen, die auf den Schaft des Befestigungsmittels geklemmt werden kann. Hierzu weist die Scheibe eine Aussparung auf, deren Innendurchmesser geringfügig kleiner ist als der Außendurchmesser des Befestigungsmittels.

Um den Einsatz über die Halterung an dem Mähwerk zu befestigen, kann ein Sicherungselement vorgesehen sein, das auf dem Befestigungsmittel beispielsweise verklemmt werden kann, nachdem das Befestigungsmittel durch eine Öffnung in dem Mähwerk geführt wurde, wobei das Sicherungselement einen größeren Durchmesser als die Öffnung aufweist. Das Sicherungselement kann auch ein Gewindeelement vorzugsweise in der Art einer Mutter sein, das auf das Befestigungsmittel aufgeschraubt wird. Besonders günstig ist es, eine Flügelmutter oder auch eine Rändelmutter zu verwenden, da diese besonders einfach und bequem in der Handhabung sind. Es ist aber auch denkbar, einen Formschluß zu erzielen, indem das Befestigungselement eventuell mittels eines entsprechend ausgeführten Bereichs an dem Gehäuse oder einem mit dem Gehäuse verbundenen Bauteil verhakt wird.

Das Sicherungselement kann gegen ein Verdrehen durch Anschläge gesichert werden, die direkt oder indirekt an dem Einsatz vorgesehen sind. Beispielsweise kann es sich bei den Anschlägen um vorstehende Wandungsteile oder an dem Einsatz befestigte bzw. befestigbare Bauteile, wie Stifte, Schrauben o.ä., handeln. Besonders einfach ist es aber, wenn in dem Einsatz ein zurückgesetzter bzw. vertiefter Bereich vorgesehen ist, wobei die Anschläge durch eine oder mehrere Seiten(flächen) dieses Bereichs gebildet werden können.

Das Befestigungsmittel wird durch das Sicherungselement an einem Verdrehen bezogen auf den Einsatz gehindert. Es kann zusätzlich vorgesehen werden, daß die Aussparung oder auch die Öffnung derart ausgebildet ist, daß das Befestigungsmittel bezogen auf den Einsatz verschoben werden kann, um beispielsweise während der Montage des Einsatzes an einem weiteren Bauteil, wie dem Gehäuse eines Mähwerks, Form- oder Größenabweichungen des Einsatzes bzw. des Bauteils ausgleichen zu können. Es können eine oder mehrere Gleitflächen vorzugsweise an einer Wandung des Einsatzes vorgesehen sein, durch die die Bewegungsmöglichkeiten des Befestigungsmittels bzw. des Sicherungselements bestimmt bzw. beschränkt werden. Eine solche Gleitfläche kann beispielsweise durch einen Anschlag gebildet werden, der ein Verdrehen unterbindet, aber eine Verschiebebewegung erlauben kann. Vorzugsweise wird/werden die Gleitfläche(n) durch einen zurückgesetzten bzw. vertieften Bereich des Einsatzes gebildet.

In einfacher Weise kann eine Verschiebebewegung des Befestigungsmittels, vorzugsweise quer zu seiner Längserstreckung, dadurch ermöglicht werden, daß die Öffnung in der Wandung und/oder die Aussparung in dem Sicherungselement länglich ausgebildet ist. Eine Ausbildung in der Art eines Langloches ist aus fertigungstechnischer Sicht einfach in der Ausführung. Die kleinere Erstreckung der Aussparung bzw. der Öffnung kann dabei nur geringfügig größer als der Durchmesser des Befestigungsmittels ausgeführt sein, so daß die Kanten die Bewegungsmöglichkeit desselben begrenzen/bestimmen. Dies kann beispielsweise erreicht werden, indem die Aussparung als eine rechteckige Öffnung ausgeführt ist, die einen Vierkantansatz einer Schraube etc. aufnehmen kann, wodurch ein Verdrehen unterbunden aber ein Verschieben ermöglicht wird.

Bei dem Einsatz kann es sich um einen Abweiser, eine Leiteinrichtung oder eine Kombination solcher Elemente handeln. Vorzugsweise ist der Einsatz aber als ein Mulcheinsatz ausgeführt. Eine erfindungsgemäße Halterung kann hier besonders vorteilhaft sein, da solche Einsätze häufig gewechselt werden, um einen Umbau des Mähwerks auf die gewünschte Betriebsart zu ermöglichen.

Der Einsatz kann aus einem beliebigen Werkstoff, der ausreichend stabil ist, hergestellt werden, beispielsweise aus Metall. Besonders vorteilhaft ist aber eine Ausführung aus einem Kunststoff- bzw. einem Faserverbundmaterial, da diese Werkstoffe kostengünstig und leicht sind. Durch eine erfindungsgemäße Ausführung können hier häufig auftretende Fertigungsungenauigkeiten und eine eventuell auftretende geringe Festigkeit ausgeglichen werden.

Halterungen oder auch Mähwerke können an einem Fahrzeug bzw. Arbeitsgerät zur Rasen-, Garten- bzw. Grundstückspflege eingesetzt werden, da hier kostengünstige, robuste Lösungen gefordert sind, die ebenso eine einfache und bequeme Handhabung gewährleisten sollen.

In der Zeichnung ist ein nachfolgend näher beschriebenes Ausführungsbeispiel der Erfindung dargestellt. Es zeigt:
- Fig. 1: eine Ansicht eines Mähwerks mit einem Einsatz von unten betrachtet,
- Fig. 2: eine Explosionsdarstellung einer Halterung zur Befestigung des Einsatzes an einem Gehäuse,
- Fig. 3: einen Schnitt durch die Halterung aus Fig. 2 entlang der Linie 3 - 3,
- Fig. 4: einen Schnitt durch die Halterung entlang der Linie 4 - 4 aus Fig. 3 und
- Fig. 5: eine teilweise Ansicht der Halterung von unten betrachtet.

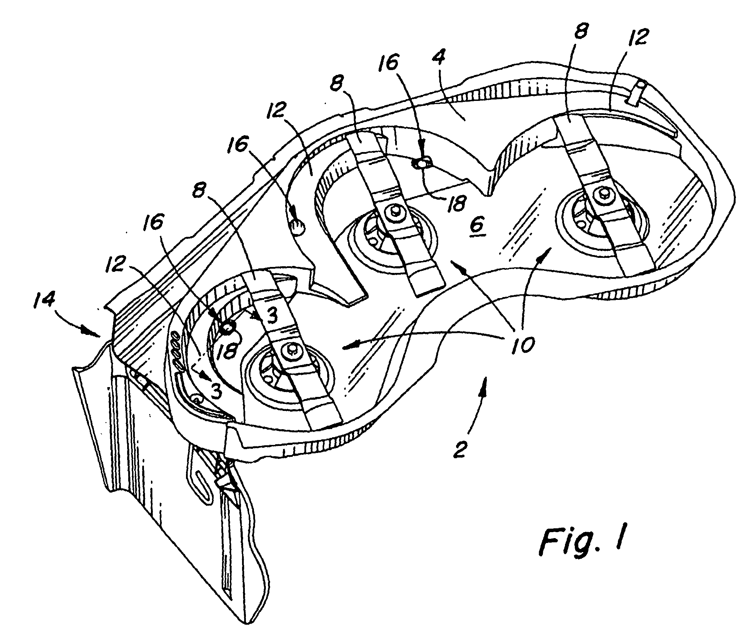

Fig. 1 zeigt die Unterseite eines Mähwerks 2, das mit einem Mulcheinsatz bzw. Einsatz 4 entsprechend der vorliegenden Erfindung ausgestattet ist. Das Mähwerk 2 umfaßt ein Gehäuse 6, das an einem Fahrzeug bzw. einem Arbeitsgerät angebracht werden kann, um Pflanzen zu schneiden, wenn sich das Fahrzeug bzw. das Arbeitsgerät über den Untergrund bewegt. Drei Messer 8 werden durch das Mähwerk 2 getragen und beispielsweise durch einen Motor oder Motoren angetrieben, so daß sie in einer im allgemeinen horizontalen Ebene rotieren.

Der Einsatz 4 ist in einem vorderen Bereich des Gehäuses 6 angeordnet und trägt dazu bei, drei im allgemeinen kreisförmige Mähkammern 10 zu bestimmen, in denen die Messer 8 rotieren und Pflanzen schneiden. Der Einsatz 4 bestimmt gebogene Frontwände 12, die dazu dienen, Frontwände der Mähkammern 10 jedes Messers 8 zu bilden, so daß der Einsatz 4 als ein Abweiser in jeder Mähkammer 10 wirkt, um Planzenabschnitte zurück zu den Messern 8 zu lenken, um nochmals geschnitten zu werden. Der Einsatz 4 dient auch dazu, eine Auswurföffnung bzw. einen Auswurf 14 des Gehäuses 6 zu verschließen, so daß die Pflanzenabschnitte, nachdem sie durch die Messer 8 geschnitten wurden, in dem Gehäuse 6 eingeschlossen sind, so daß sie, nachdem sie durch die Messer 8 nochmals geschnitten oder gemulcht wurden, auf der Oberfläche des Untergrunds abgelegt werden. Der - Einsatz 4 erstreckt sich fast über die gesamte Breite des Gehäuses 6 und wird durch eine Halterung 16, welche Befestigungsmittel 18 wie Schrauben umfaßt, in seiner Position gehalten.

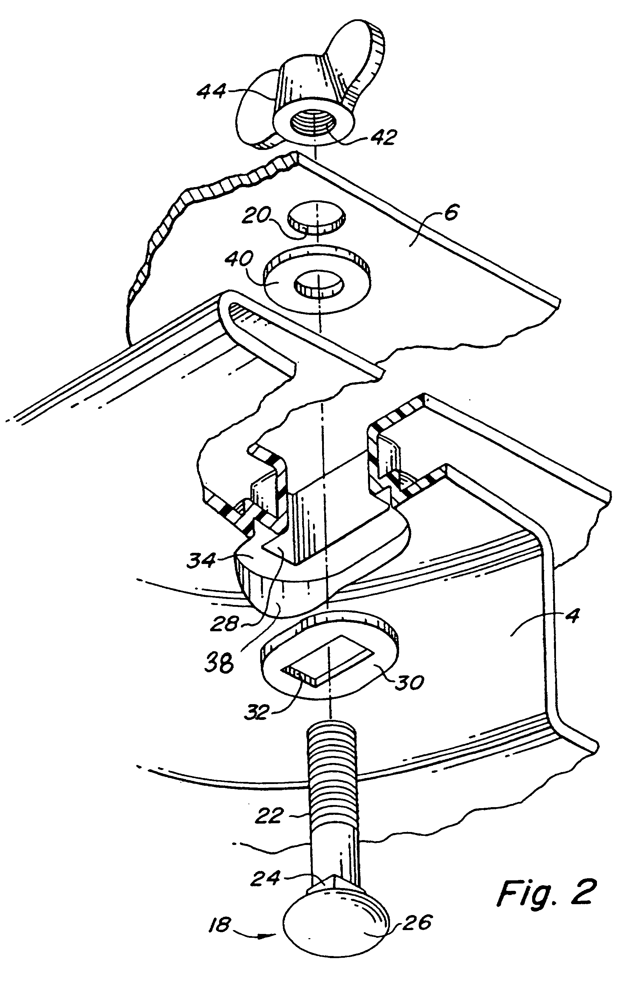

Eine Explosionsdarstellung der Halterung 16 ist in Fig. 2 dargestellt. Der Einsatz 4 wird an dem Gehäuse 6 über eine Anbauöffnung 20 angeschraubt dargestellt. Das dargestellte Befestigungsmittel 18 ist eine übliche Schloßschraube, die einen Schaft mit einem Gewindebereich 22 und einem quadratischen Bereich 24, der an einen gerundeten Kopf 26 angrenzt, aufweist. Das Befestigungsmittel 18 erstreckt sich durch eine verlängerte, rechteckige Öffnung 28 in dem Einsatz 4. Die Verlängerung der Öffnung 28 erlaubt in dem bevorzugten Ausführungsbeispiel eine längsgerichtete Bewegung der Halterung 16 um eine mögliche Fehlausrichtung zwischen der Öffnung 28 und der Anbauöffnung 20 zu überwinden. Ein Mittel 30, das in der bevorzugten Ausführungsform als eine längliche Unterlegscheibe mit einer rechteckigen Öffnung 32 ausgeführt ist, sichert den quadratischen Bereich 24 des Schafts des Befestigungsmittels 18 gegen eine relative Rotation.

Das Mittel 30 liegt an einer Schulter 34 in einem länglichen, vertieften bzw. zurückgesetzten Bereich 36 an, der in den Einsatz 4 eingeformt ist und eine zu der Form des Mittels 30 passende Form aufweist, so daß die Seiten des Mittels 30 an Seitenwänden 38 des zurückgesetzten Bereichs 36 angreifen, um eine Rotation des Mittels 30 mit Bezug auf den Einsatz 4 zu verhindern. In der gezeigten bevorzugten Ausführungsform ist der zurückgesetzte Bereich 36 etwas länger als das Mittel 30, so daß sich das Mittel 30 in dem zurückgesetzten Bereich 36 und das Befestigungsmittel 18 in der Aussparung 32 in dem Mittel 30 während einer Installation des Einsatzes 4 verschieben kann, um das Befestigungsmittel 18 mit der Anbauöffnung 20 auszurichten.

Ein Sicherungsmittel (Klemmscheibe) 40 wird verwendet, um das Befestigungsmittel 18 und das Mittel 30 an ihrem Platz zu halten, so daß die Halterung 16 und der Einsatz 4 einen einzigen Teil bilden. Das Sicherungsmittel 40 weist einen inneren Durchmesser auf, der geringfügig kleiner ist als der äußere Durchmesser des Schafts des Befestigungsmittels 18. Die Schiebebewegung bei einem Aufsetzen des Sicherungsmittels 40 auf den Schaft des Befestigungsmittels 18 bewirkt, daß das Sicherungsmittel 40 das Befestigungsmittel 18 verklemmt und daß das Sicherungsmittel 40 an seinem Platz gehalten wird, wobei die Halterung 16 an dem Einsatz 4 gegen axiale Bewegung gesichert wird, während es dem Befestigungsmittel 18 erlaubt ist, sich in Längsrichtung in der Öffnung 28 durch den Einsatz 4 zu bewegen.

Der einheitliche Teil (die Halterung 16 und den Einsatz 4 umfassend) kann unterhalb des Gehäuses 6 positioniert werden, so daß sich der Gewindebereich 22 des Befestigungsmittels 18 durch die Anbauöffnungen 20 erstreckt. Ein Innengewinde 42 eines Sicherungselements 44, das in dem bevorzugten Ausführungsbeispiel als eine Flügelmutter ausgebildet ist, oder andere passende Gewindebauteile greifen an dem Gewindebereich 22 des Befestigungsmittels 18 an der Oberseite des Gehäuses 6 an, wobei sie den Einsatz 4 an seinem Platz in dem Gehäuse 6 halten. Jede Standardmutter oder jedes andere Bauteil mit Innengewinde, das größer ist als der Durchmesser der Anbauöffnung 20 kann die hier beschriebene Flügelmutter 22 ersetzen.

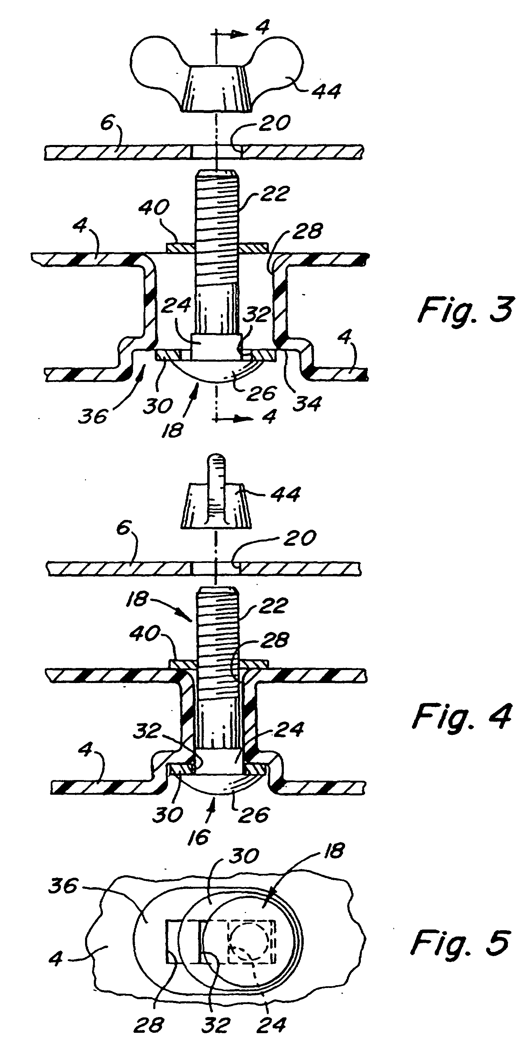

Fig 3. zeigt eine Querschnittansicht der Halterung 16 entlang der Linie 3 - 3 der Fig. 1. Die gezeigte Längserstreckung der Öffnung 28 veranschaulicht die Befähigung des Mittels 30 sich seitlich innerhalb des zurückgesetzten Bereichs 36 entlang der Längserstreckung der Öffnung 28 (nach links und rechts, wie es in Fig. 3 dargestellt wird) zu bewegen. Gleichzeitig ist die Öffnung 32 in dem Mittel 30 länger als der quadratische Bereich 24 des Schafts des Befestigungsmittels 18, so daß sich das Befestigungsmittel 18 in Längsrichtung in dem Mittel 30 entlang der Längserstreckung der Öffnung 32 bewegen kann. Diese Einstellung in Längsrichtung erlaubt es einem Einrichter, leichte Fehlausrichtungen zwischen den Befestigungsmitteln 18 und den Anbauöffnungen 20 während der Montage des Einsatzes 4 unterhalb des Gehäuses 6 auszugleichen. Eine Einstellung in Längsrichtung kann in ähnlicher Weise durch alternative Ausführungsformen des gezeigten zurückgesetzten Bereichs 36 und dem Mittel erzielt werden. Beispielsweise können die Öffnung 32 und die Unterlegscheibe 30 quadratisch ausgeführt sein, um den quadratischen Bereich 24 des Schafts des Befestigungsmittels 18 genau zu ergänzen, so daß eine Einstellung des Befestigungsmittels 18 in der Öffnung 28 durch den Einsatz 4 nur davon begleitet würde, daß das Mittel 30 in dem zurückgesetzten Bereich 36 des Einsatzes 4 gleiten würde. Als eine weitere Alternative kann das Mittel 30 so ausgeführt sein, daß sie genau in den zurückgesetzten Bereich 36 paßt (so daß die Gleitmöglichkeit ausgeschlossen wird) und die Öffnung 32 in dem Mittel 30 in der gleichen Länge wie die Öffnung 28 durch den Einsatz 4 ausgeführt sein kann.

Es wird nun auf die Fig. 4 Bezug genommen, in der ein zweiter Querschnitt der Halterung entlang der Linie 4-4 aus Fig. 3 gezeigt wird und der die Quererstreckung der Öffnung 28 darstellt. Die Quererstreckung des zurückgesetzten Bereichs 36 und die Quererstreckung der Öffnung 28 sind jeweils nur geringfügig größer als die korrespondierenden Abmessungen des Mittels 30 und des Befestigungsmittels 18. Der quadratische Bereich 24 des Schafts des Befestigungsmittels 18 wird daher durch die Seitenwände der Öffnung 32 in das Mittel 30 gegen Drehung gehalten, wie auch im wesentlichen gegen seitliche Bewegung zur Linken und zur Rechten, wie es aus Fig. 4 ersehen werden kann. Das Mittel 30 wiederum wird gegen Drehung und seitliche Bewegung zur Linken und zur Rechten durch die Seitenwände des zurückgesetzten Bereichs 36, wie aus Fig. 4 ersichtlich, gehalten.

Fig. 5 zeigt eine Ansicht der Halterung 16 von unten, die in dem zurückgesetzten Bereich 36 des Einsatzes 4 angeordnet ist, wobei die Beziehung zwischen dem quadratischen Bereich 24 des Schafts des Befestigungsmittels 18 und der Öffnung 32 in dem Mittel 30, wie auch die Beziehung zwischen dem Mittel 30 und dem zurückgesetzten Bereich 36 des Einsatzes 4 weiter dargestellt wird. Diese Beziehungen sichern das Befestigungsmittel 18 gegen eine relative Drehung bezogen auf den Einsatz 4, während sie es dem Befestigungsmittel 18 erlauben, von Seite zu Seite (links und rechts, wie aus Fig. 5 zu ersehen) entlang der Längserstreckung der Öffnung 28 in dem Einsatz 4 bewegt zu werden.

Obwohl die Erfindung mit Bezug auf die gezeigten Ausführungsformen zur Verwendung mit einem Mulcheinsatz beschrieben wird, wird es der Fachmann so verstehen, daß die Erfindung in der beschriebenen Form oder in einer veränderten Form zur Verwendung in anderen Anwendungsfällen vorteilhaft sein, kann, in denen es wünschenswert ist, einen Einsatz unterhalb eines Mähwerks anzubringen. Die vorliegende Erfindung soll nicht auf die zuvor beschriebenen Ausführungsformen begrenzt sein, sondern soll nur durch die folgenden Ansprüche begrenzt werden.

## Patentansprüche

1. Halterung (16) zwischen einem Einsatz (4) und einem Gehäuse (6) eines Mähwerk (2) mit zumindest einem Befestigungsmittel (18), das durch eine Öffnung (28) in dem Einsatz (4) hindurchführbar und mit dem Gehäuse (6) in Formschluß bringbar ist, und mit Mitteln (30) durch die das Befestigungsmittel (18) gegen ein Verdrehen bezogen auf den Einsatz (4) sicherbar ist, **dadurch gekennzeichnet, daß** die Mittel (30) von dem Einsatz (4) getrennt und bezogen auf den Einsatz (4) unverdrehbar anordenbar sind und eine Aussparung (32) zur unverdrehbaren Aufnahme des Befestigungsmittels (18) aufweisen.

2. Halterung nach Anspruch 1, **gekennzeichnet durch** ein Sicherungsmittel (40), **durch** das das Befestigungsmittel (18) in der Öffnung (28) gehalten werden kann.

3. Halterung nach einem oder mehreren der vorherigen Ansprüche, **gekennzeichnet durch** ein Sicherungselement (44), **durch** das das Befestigungsmittel (18) an dem Gehäuse (6) gesichert werden kann.

4. Halterung nach einem oder mehreren der vorherigen Ansprüche, **dadurch gekennzeichnet, daß** die Mittel (30) in einem vorzugsweise vertieften Bereich (36) des Einsatzes (4) aufgenommen werden können.

5. Halterung nach einem oder mehreren der vorherigen Ansprüche, **dadurch gekennzeichnet, daß** die Öffnung (28) bzw. die Aussparung (32) eine bezogen auf ihre Quererstreckung translatorische Bewegung des Befestigungsmittels (18) zuläßt.

6. Halterung nach einem oder mehreren der vorherigen Ansprüche, **dadurch gekennzeichnet, daß** die Öffnung (28) und/oder die Aussparung (32) länglich vorzugsweise in der Art eines Langlochs ausgebildet ist/sind.

7. Halterung nach einem oder mehreren der vorherigen Ansprüche, **dadurch gekennzeichnet, daß** der Einsatz (4) ein Mulcheinsatz ist.

8. Halterung nach einem oder mehreren der vorherigen Ansprüche, **dadurch gekennzeichnet, daß** der Einsatz (4) zumindest im wesentlichen aus einem Kunststoff- bzw. Faserverbundmaterial besteht.

9. Mähwerk (2) mit einer Halterung (16) nach einem oder mehreren der vorherigen Ansprüche.

10. Fahrzeug bzw. Arbeitsgerät mit einer Halterung (16) nach einem oder mehreren der Ansprüche 1 bis 8, vorzugsweise ein Fahrzeug bzw. Arbeitsgerät zur Rasen-, Garten- bzw. Grundstückspflege.

## Claims

1. Retaining means (16) between in insert (4) and housing (6) of mower deck (2) with at least one fixing means (18) which can be passed through an opening (28) in the insert (4) and be brought into positive engagement with the housing (6), and with means (30) through which the fixing means (18) can be secured against rotation relative to the insert (4), **characterized in that** the means (30) are separate from the insert (4) and can be arranged incapable of rotation relative to the insert (4) and comprise a recess (32) for non-rotatable reception of the fixing means (18).

2. Retaining means according to claim 1, **characterized by** securing means (40) through which the fixing means (18) can be retained in the opening (28).

3. Retaining means according to one or more of the preceding claims, **characterized by** a securing element (44) through which the fixing means (18) can be secured on the housing (6).

4. Retaining means according to one or more of the preceding claims, **characterized in that** the means (30) can be received in a preferably sunken region (36) of the insert (4).

5. Retaining means according to one or more of the preceding claims, **characterized in that** the opening (28) or the recess (32) allows movement in translation relative to its transverse extent of the fixing means (18).

6. Retaining means according to one or more of the preceding claims, **characterized in that** the opening (28) and/or the recess (32) is or are elongated preferably in the nature of a elongated hole.

7. Retaining means according to one or more of the preceding claims, **characterized in that** the insert (4) is a mulching insert.

8. Retaining means according to one or more of the preceding claims, **characterized in that** the insert (4) consists at least substantially of a plastics or fibre-reinforced material.

9. A mower deck (2) with a retaining means (16) according to one or more of the preceding claims.

10. A vehicle or utility implement with a retaining means (16) according to one or more of claims 1 to 8, preferably a vehicle or utility implement for lawn, garden or plot care.

## Revendications

1. Fixation (16) entre une garniture (4) et un carter (6) d'une faucheuse (2), comportant au moins un moyen de fixation (18) qui peut être introduit dans la garniture (4) à travers une ouverture (28), et qui peut être immobilisé par verrouillage de formes avec le carter (6), ladite fixation (16) comportant des moyens (30) avec lesquels le moyen de fixation (18) peut être sécurisé contre une rotation par rapport à la garniture (4), **caractérisée en ce que** les moyens (30) sont séparés de la garniture (4), et disposés de manière à ne pas pouvoir tourner par rapport à la garniture (4), et présentent une échancrure (32), en vue de l'insertion sans possibilité de rotation du moyen de fixation (18).

2. Fixation selon la revendication 1, **caractérisée par** un moyen de sécurisation (40), à travers lequel le moyen de fixation (18) peut être retenu contre la ouverture (28).

3. Fixation selon l'une ou plusieurs des revendications précédentes, **caractérisée par** un élément de sécurisation (44) à travers lequel le moyen de fixation (18) peut être sécurisé sur le carter (6).

4. Fixation selon l'une ou plusieurs des revendications précédentes, **caractérisée en ce que** les moyens (30) peuvent être logés dans une zone (36) de préférence en creux de la garniture (4).

5. Fixation selon l'une ou plusieurs des revendications précédentes, **caractérisée en ce que** l'ouverture (28) ou l'échancrure (32) permet un déplacement de translation du moyen de fixation (18) par rapport à son orientation transversale.

6. Fixation selon l'une ou plusieurs des revendications précédentes, **caractérisée en ce que** l'ouverture (28) et/ou l'échancrure (32) sont pratiquées en longueur, de préférence sous forme d'un trou allongé.

7. Fixation selon l'une ou plusieurs des revendications précédentes, **caractérisée en ce que** la garniture (4) est une garniture de hachage.

8. Fixation selon l'une ou plusieurs des revendications précédentes, **caractérisée en ce que** la garniture (4) est réalisée, au moins essentiellement en matière plastique ou en matière fibreuse agglomérée.

9. Faucheuse (2) comportant une fixation (16) selon l'une ou plusieurs des revendications précédentes.

10. Véhicule ou appareil de travail comportant une fixation (16) selon l'une ou plusieurs des revendications 1 à 8, de préférence un véhicule ou un appareil de travail destiné à l'entretien de pelouses, de jardins ou de terrains.
